# EUROPEAN PATENT SPECIFICATION

(11) **EP 2 822 428 B1**
(45) Date of publication and mention of the grant of the patent: **22.05.2019**
(21) Application number: 13758469.4
(22) Date of filing: 11.03.2013
(51) Int. Cl.: A47J 27/62, F24C 7/08, H05B 3/68

(54) **COOKING APPLIANCE**
KOCHVORRICHTUNG
APPAREIL DE CUISSON

(30) Priority: 09.03.2012 US 201261609135 P; 09.03.2012 US 201261609186 P
(43) Date of publication of application: 14.01.2015
(73) Proprietor: Unovo, LLC, Richmond CA 94804 (US); Alipour, Ehsan, San Rafael CA 94901 (US); Strecker, Joseph, Benjamin, Half Moon Bay, CA 94019 (US); Moinzadeh, Farshad, Greenbrae, CA 94904 (US)
(72) Inventor: ALIPOUR, Ehsan, San Francisco, CA 94133 (US); STRECKER, Joseph, Benjamin, Half Moon Bay, CA 94019 (US); MOINZADEH, Farshad, Greenbrae, CA 94904 (US)
(74) Representative: Kramer Barske Schmidtchen Patentanwälte PartG mbB
(86) International application number: PCT/US2013/030293
(87) International publication number: WO 2013/134785

(56) References cited:
- EP-A1- 0 780 081
- WO-A1-2012/006674
- WO-A1-2012/006674
- WO-A1-2012/030826
- CA-A1- 2 601 543
- CA-A1- 2 727 253
- DE-A1-102010 008 420
- RU-C1- 2 334 447
- RU-U1- 91 430
- RU-U1- 94 728
- SU-A1- 78 180
- SU-A1- 1 812 392
- US-A1- 2005 247 697

## Description

### FIELD OF THE INVENTION

Embodiments of the invention are related generally to cooking appliances and more specifically to an appliance for inductive heating of a food receptacle.

### BACKGROUND

An electric induction cooker heats a cooking vessel by passing an electrical current though an electrical coil in the cooker to induce a flow of electrical current in the vessel. Current flowing in the vessel is converted to heat by the electrical resistance of the material of the vessel and raises the temperature of the vessel. For heating with an induction cooker, vessels made from ferrous materials may be preferred over vessels made from other materials. A vessel with magnetic properties suitable for efficient heating by with an induction cooker may be referred to as "induction-ready" or "induction-compatible." An induction cooker may include a sensing system for detecting the presence of an induction-compatible vessel and may prevent current flow through an induction coil used for inductive heating when an induction-compatible vessel is not present. While a sensing system may be able to detect the presence of an induction-compatible vessel, the sensing system may not recognize when a cooking vessel has been offset from an optimal position above an induction coil, possibly resulting in uneven heating of the vessel and wasted energy.

An induction cooker may include user controls for selecting cooking start time, cooking duration, temperature setting, and other parameters related to cooking. A person operating the induction cooker may be able to select any combination of settings within the operating range of the cooker. However, if the person operating the cooker selects settings which are not suited to a particular type of food or cooking vessel or the person fails to adequately monitor the food and cooking equipment, the food may be cooked improperly or the cooking equipment may be damaged.

Some induction cookers offer a choice of one or more cooking programs, with each cooking program corresponding to a group of stored cooking parameters. Each cooking program may implement temperature settings, cooking durations, and other parameters associated with a selected cooking method. Examples of cooking programs include, but are not limited to, boiling, simmering, searing, baking, roasting, frying, and immersion cooking of food vacuum sealed in a bag or container (sometimes referred to as "sous vide"), and the temperature, time duration, and other parameter settings associated with each cooking program.

A cooking program may enable precise repetition of a selected set of cooking conditions. However, induction cookers have not been equipped to detect a mismatch between a selected cooking program and a selected cooking vessel. A person operating an induction cooker may select a cooking program which is not suited to a particular food item or type of cookware, possibly resulting in improperly prepared food or damage to the cooking vessel or cooker. For example, if a person selects a cooking program corresponding to "fry" instead of "boil" for preparing a food item by immersion in boiling water, the cooker may fail to detect a pot that has boiled dry, possibly damaging the pot and the cooker. Or, if a person places a thin-walled baking pan instead of a heavy frying pan on the cooker and erroneously sets the cooker to a program having a high cooking temperature, the pan may be severely damaged or even destroyed by the cooker. An overheated pan or other cooking vessel may in turn cause the surface of the induction cooker to suffer heat damage. A mismatch between a selected cooking program and a selected cooking vessel may lead to a safety hazard, for example a risk of fire or a risk to a person of injury by contact with hot surfaces, scalding liquids, or steam burns.

DE 10 2010 008 420 A1 discloses a cooktop with an electric heating device and a control circuit for controlling a thermal power of the cooktop in response to a food arranged inside an associated food receptacle.

US 2005/0247697 A1 discloses a pot placed on a heat-insulating pan.

WO 2012/006674 A1 discloses a cooking appliance with at least one temperature-controlled heating element, a user interface for enabling a user to select a predefined subject for cooking, and a processor module that maintains a cooking data for cooking the selected predefined subject.

CA 2 601 543 A1 discloses a cooking device for detecting boiling of liquids. The cooking device includes a cooking vessel and a vessel support mechanism communicating with each other by a computer program. The computer program comprises a code segment for receiving variables relating to parameters and/or characteristics of the cooking vessel interchanged via an RFID temperature-sensing device.

CA 2 727 253 A1 discloses a device for inductive heating of a liquid or food. A cup is provided with a removable cartridge that communicates with an inductive heating unit via an RFID tag and an RFID reader.

EP 0 780 081 A1 discloses an automatic control for heatable cooktops communicating with a cookware via sensors and wireless transponder means.

### SUMMARY

An example of a cooking apparatus in accord with an embodiment of the invention includes a food vessel having a receptacle for holding food, a stored identity for the food vessel, and a program module adapted to continuously transmit the stored identity. The example of a cooking apparatus further includes a base unit having a thermal element, a controller electrically connected to the thermal element and adapted for operational control of the thermal element, at least one but optionally many stored operating parameters with at least one of the stored operating parameters assigned to the stored identity, and a vessel identification (ID) receiver electrically connected to the controller and adapted to continuously receive the stored identity from the food vessel. When the food vessel is attached to the base unit, the vessel ID receiver in the base unit is adapted to continuously receive the stored identity from the program module and the base unit is adapted to select at least one of the optionally many stored operating parameters assigned to the stored identity. The stored identity corresponds to a value of resistance between two electrically conductive pins on the program module. The controller selects operating parameters assigned to the stored identity for the food vessel to operate and control the thermal element.

A thermal element may optionally be provided for inductive heating of the receptacle for holding food. A thermal element for cooling the receptacle may be included.

A program module optionally includes a sensor for detecting a measured parameter value from the receptacle for holding food. The controller may optionally control the thermal element according to the measure parameter value.

Another example of an embodiment of the invention comprises a food vessel with an outer housing having a side wall and an inner receptacle attached to the outer housing. The inner receptacle has a side wall separated from the side wall of the outer housing, thereby forming a space between the side wall of the outer housing and the side wall of the inner receptacle. A program module may be attached to the outer housing and positioned between the side wall of the outer housing and the side wall of the inner receptacle. The program module may include first, second, third, and fourth pins extending outward from the program module, a resistor electrically connected to the first and second pins, and a sensor electrically connected to the third and fourth pins. A value of resistance of the resistor corresponds to a stored identity for the food vessel.

Another example of an embodiment of the invention comprises a base unit for a cooking appliance. The base unit includes a cooktop for supporting a food vessel, a thermal element positioned below the cooktop, a controller electrically connected to the thermal element and adapted for controlling the thermal element, a vessel ID receiver electrically connected to the controller, a plurality of stored operating parameters, and a group of contacts for connection to the poins in the program module of the food vessel such that when the food vessel is placed on the base unit, with the pins touching the contacts, establishing electrical circuits for the controller to determine the stored identity of the program module by measuring the value of resistance for the resistor. The controller is adapted to continuously receive a stored identity for the food vessel from the vessel ID receiver, select at least one of the plurality of stored operating parameters assigned to the stored identity, and control the thermal element by the selected operating parameter.

### BRIEF DESCRIPTION OF THE DRAWINGS

FIG. 1 is a pictorial view toward the top, right side, and backside of an example of a cooking vessel and base unit in accord with an embodiment of the invention.
FIG. 2 is a view toward the right side of the example of a cooking appliance of Fig. 1.
FIG. 3 shows another view of the right side of the example of a cooking appliance of Figs. 1-2 with the cooking vessel detached from the base unit.
FIG. 4 shows a view toward the back side of the cooking appliance example of the previous figures with the cooking vessel detached from the base unit.
FIG. 5 is a view toward the top side of an example of a base unit.
FIG. 6 is a cutaway pictorial view of the example of a cooking appliance of Fig. 1. A location and viewing direction of a cutting plane for Fig. 6 is shown by a section line marked A-A in Fig. 2.
FIG. 7 illustrates an alternative embodiment of the invention adapted for holding more than one cooking vessel.
FIG. 8 is a pictorial view toward the front side of an example of a program module.
FIG. 9 is a pictorial view toward the back side of the example of a program module of Fig. 8.
FIG. 10 is a view toward the right side of the example of a program module of Figs. 8-9.
FIG. 11 is a pictorial view toward the front side of the example of a program module from Figs. 8-10, with a front cover removed to show examples of pins and an example of a light pipe in an interior cavity of the program module.
Fig. 12 is a block diagram showing examples of electrical connections in an example of a cooking appliance.
Fig. 13 is a block diagram illustrating examples of means for detecting a stored identity of a program module.

### DESCRIPTION

An appliance for cooking food includes a food vessel with a program module configured with a stored identity of the food vessel and optionally configured with a stored reference to a cooking program to be executed by a base unit when the food vessel is attached to the base unit for preparing a food item in the food vessel. The stored identity (ID) in the program module may be related to a group of operating parameters for the food vessel, with parameter values stored in the base unit or in the food vessel. An appliance may optionally be provided with a base unit to hold the food vessel and to heat or cool the food vessel. A controller in the base unit sets operating parameters for a thermal element to heat or cool the food vessel in response to a stored identity communicated from the program module to the base unit.

Embodiments of the invention are advantageous for rapidly and accurately setting operating parameters in a base unit according to characteristics of a selected food vessel, for example, but not limited to, maximum safe operating temperature, maximum safe operating pressure, maximum time duration while operating at a selected temperature, and maximum pressure while operating at a selected temperature. A safe operating limit may be associated with an individual food vessel or with a class of food vessels. For example, a safe maximum temperature for food vessels intended for cooking food by immersion in hot water may be different than a safe maximum temperature for food vessels intended for deep frying food in combustible cooking oil. As another example, maximum cooking time duration for a food vessel intended for immersion cooking of food in hot water may be related to an amount of water the vessel can hold and may therefore be different from maximum time duration for a food vessel intended for baking or roasting. By setting operating parameters according to one or more stored identities in a program module, a base unit may avoid settings that may damage a food vessel or base unit or present a safety hazard to a person using the cooking appliance or consuming food cooked with the appliance. A base unit embodiment of the invention may automatically match a cooking program to a food vessel with a stored ID in a program module.

Embodiments of the invention are also advantageous for accurately repeating a preferred set of cooking parameters, for example to accurately repeat a cooking method. A parameter set by a program module may correspond to a cooking program to be executed by the controller in the base unit. A cooking program may include safe operating limits for a food vessel or for contents of the food vessel, a preferred variation of temperature with time, cook time duration, or preferred settings for other parameters such as humidity or pressure in a food vessel, temperature of a food item, and so on. Placing a food vessel having a program module may automatically configure the base unit for a selected cooking program without further control settings by a person using the appliance. Undercooking or overcooking of food may be avoided, an especially valuable attribute for operation in a commercial kitchen where distracted or busy staff might apply incorrect manual settings for temperature, time, or other parameters related to food preparation.

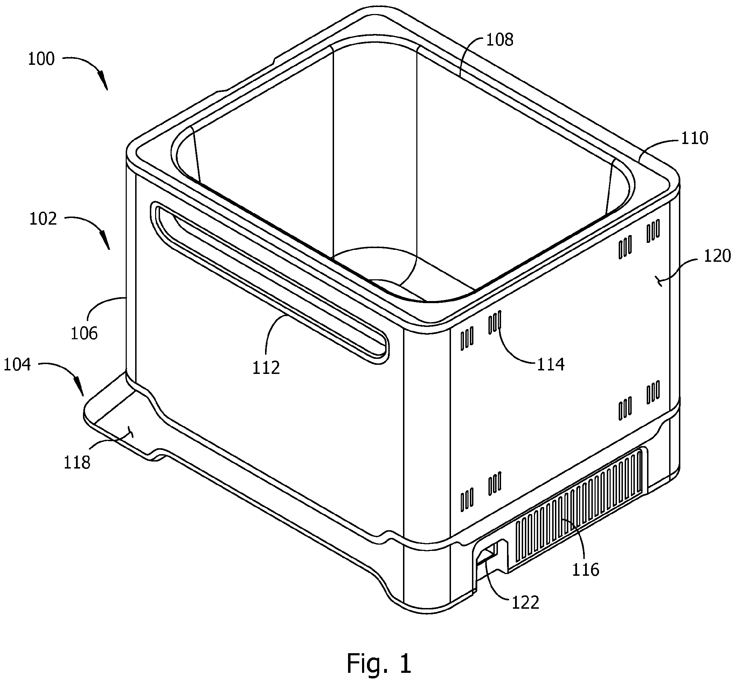

Fig. 1 illustrates an example of a cooking appliance 100 in accord with an embodiment of the invention. The example of a cooking appliance 100 includes an example of a food vessel 102 removably mounted on an example of a base unit 104. The food vessel and base unit may be of any practical size according to the intended use. For example, in some embodiments of the invention, a food vessel and base unit are sized for portability or for countertop use. In other embodiments of the invention, a food vessel may be as large as needed to hold a large food item or a large number of individual servings. A base unit may optionally be sized to have a cooktop at kitchen countertop height when the bottom of the base unit is resting on the kitchen floor.

The food vessel 102 includes an inner receptacle 108 and optionally includes an outer housing 106. The viewing direction in the example of Fig. 1 is toward the open top of the inner receptacle 108, the back side 120 of the outer housing 106, and the right side 118 of the base unit 104. A top rim skirt 110 attaches the inner receptacle 108 to the outer housing 106. The top rim skirt 110 may be provided as a separate part or may alternatively be formed as in integral part of either the inner receptacle 108 or outer housing 106. The back side 120 of the outer housing 106 may optionally be formed with vents 114 for air ventilation and for draining any liquid that may accumulate between the inner receptacle and outer housing. The food vessel 102 optionally includes one or more handles 112 which enable a person to lift the food vessel 102 without coming into contact with the inner receptacle 108. The base unit 104 optionally includes an electrical connector 122 for a detachable power cord and may include ventilation vents 116.

The food vessel 102 in Fig. 1 is an example of a vessel for immersion cooking of food in a liquid medium such as water or cooking oil. An object of the invention is to provide a base unit 104 suitable for use with many different types of food vessels that may differ from one another in size, materials, preferred or limiting conditions of use such as temperature, amount of food, humidity, pressure, placement of food in a sealed or unsealed vessel, and so on. Other types of food vessels may be substituted for the example of a food vessel 102 in the figures herein. Examples of other food vessels suitable for use with an embodiment of the invention include, but are not limited to, an oven for baking or roasting, a frying pan, a food dehydrator, a sauce pan, a sous vide pot, a pressure cooker, a saute pan, a Dutch oven, a deep fryer, a coffee maker, a tea kettle, a crock pot, a bread maker, a casserole, a stew pot, a wok, a rice cooker, a stock pot, a yogurt maker, an ice cream maker, a popcorn popper, a pan, tray, or dish for serving food, and so on. Each food vessel may be provided with a stored identity. A unique stored identity may be assigned to each type of food vessel. Alternately, a unique stored identity may be assigned to each food vessel individually. The base unit may automatically choose operating settings according to the stored ID of a food vessel being used on the base unit.

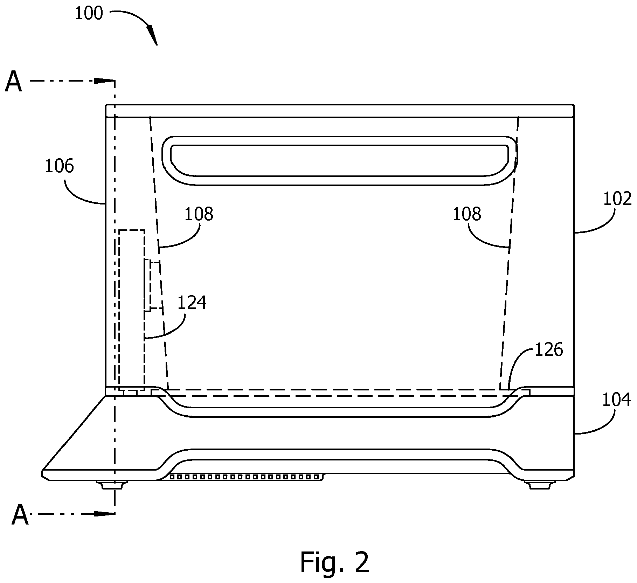

Fig. 2 shows a view toward the right side of the example of a cooking appliance 100 of Fig. 1. The inner receptacle 108, shown by dashed lines in Fig. 2, is held within the outer housing 106. A program module 124 is attached to the food vessel 102. Part of the program module may be in close contact with the inner receptacle 108. The program module 124 may optionally be removable from the food vessel 102, for example by slidable engagement with the food vessel 102, so that different program modules may be attached to the food vessel. When the food vessel 102 is resting on the base unit 104 as shown in Fig. 2, the inner receptacle 108 contacts a cooktop 126 on the top side of the base unit 104. In the example of Fig. 2, the program module 124 is positioned on a front side of the food vessel 102. The program module may alternatively be positioned at other locations in the food vessel 102.

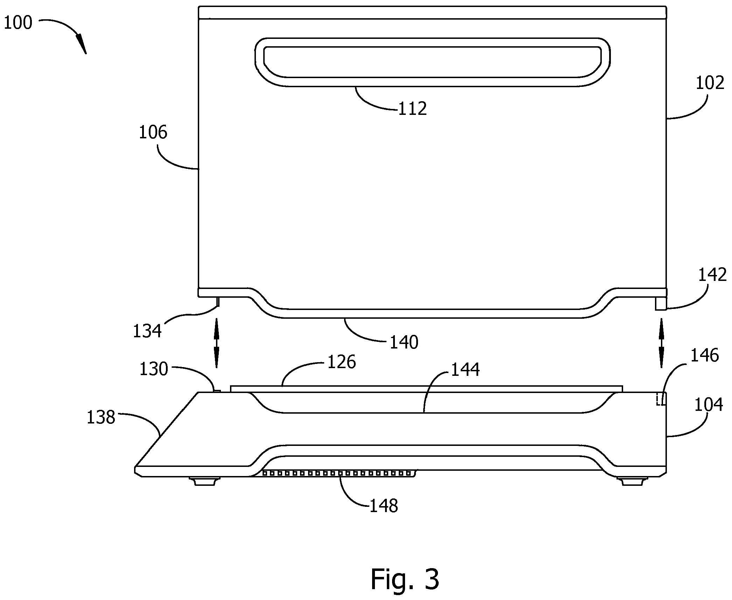

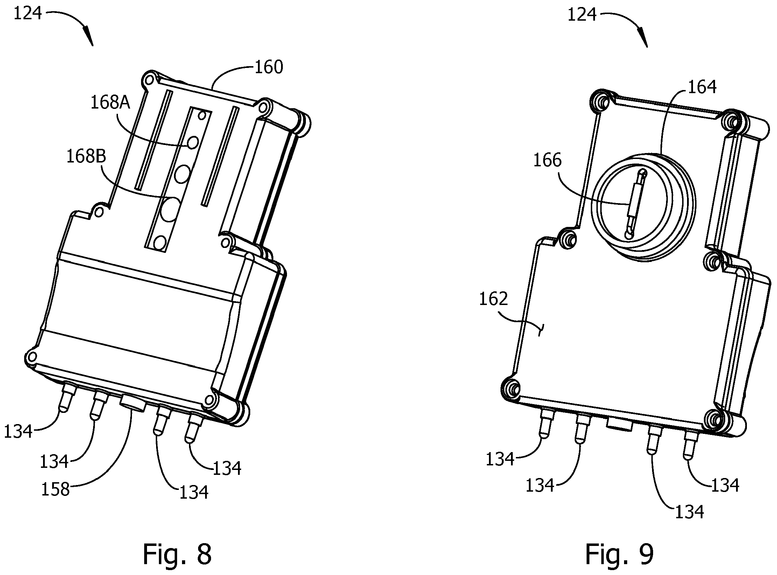

The food vessel 102 may be detached from the base unit 104, for example to clean the food vessel, place or remove a food item in the food vessel, or to attach another food vessel on the base unit. Fig. 3 shows an example of a food vessel 102 separated vertically from a base unit 104, perhaps by lifting the food vessel using the handle 112. Another handle 112 may be included on the right side of the outer housing 106. A cooktop 126 is located on a top side of the base unit 104. Airflow apertures 148 are located on a bottom side of the base unit 104 for ventilating with an air mover such as a fan or blower inside the base unit. In the example of Fig. 3, at least one pin 134 extends downward from a bottom side of the food vessel 102 and touches a contact 130 when the food vessel is resting on the base unit. The pin 134 will be described in more detail beginning with discussion of Fig. 8 below.

A side flange 140 on the bottom left side edge of the outer housing 106 engages with a sliding fit into a corresponding side channel 144 on the base unit 104. Although not visible in Fig. 2, another side flange 140 may be provided on the bottom right side edge of the outer housing 106 for engaging another side channel 144 on the right side of the base unit 104. A rear flange 142 extending downward from the back side of the outer housing 106 engages with a sliding fit into a corresponding rear channel 146 on the base unit 104. The side and rear flanges on the food vessel 102 and the side and rear channels on the base unit 104 cooperate to optimize a position of the food vessel 102 above a thermal element in the base unit. The optimized position of the food vessel provides for even heating or cooling of the food vessel with minimum energy consumption.

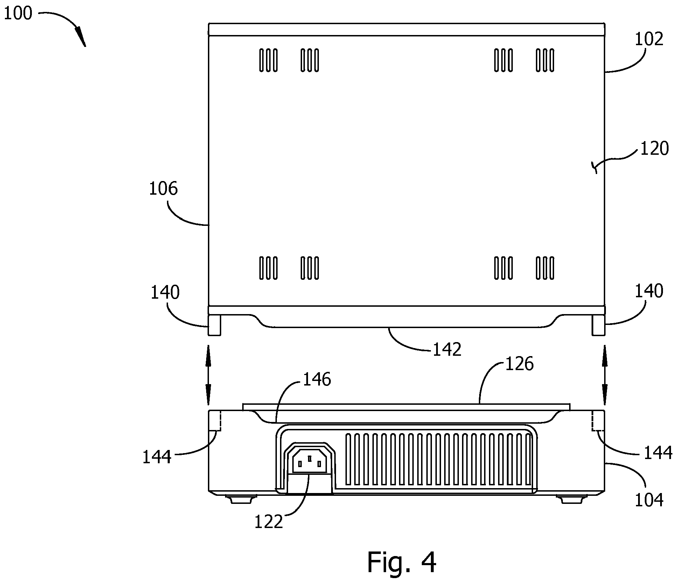

Fig. 4 continues the example of Fig. 3, showing the food vessel 102, cooktop 126, power cord connector 122, and base unit 104 in a view toward the back side 120 of the outer housing 106 and base unit. Side flanges 140 on the left and right sides of the food vessel 102 engage corresponding side channels 144 on the left and right sides of the base unit 104. A rear channel 146 on the base unit 104 receives the rear flange 142 on the food vessel 102.

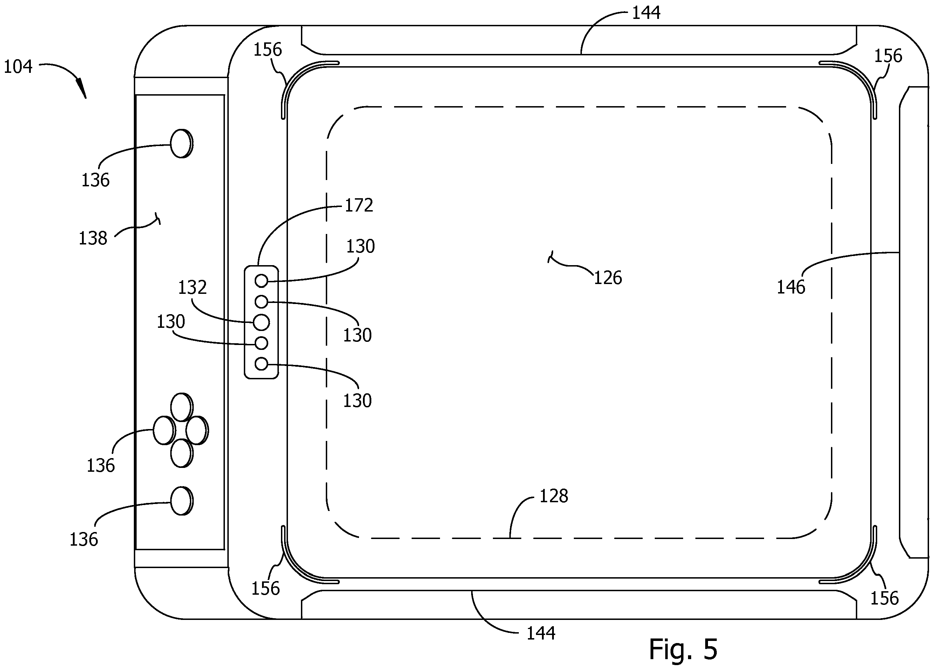

An example of a base unit 104 is shown in a view toward the cooktop 126 in Fig. 5. A side channel 144 extends along the left side of the base unit 104 at the top of the figure. Another side channel 144 extends along the right side of the base unit at the bottom of the figure. A rear channel 146 extends along the back side of the base unit. The side and rear channels provide a location reference for positioning a food vessel on the cooktop 126. Positioning ridges 156 may optionally be located on the top side of the base unit 104 to provide a positioning reference for the inner receptacle in a food vessel. A positioning reference for the outer housing and another positioning reference for the inner receptacle provide secure, optimum positioning of a food vessel above a thermal element 128 inside the base unit 104. Positioning ridges 156 may optionally be provided as a single, continuous ridge surrounding the cooktop 126 or may be discontinuous as shown in the figures. When a food vessel is attached to a base unit, the inner receptacle may slidably engage with the positioning ridges 156 for accurate positioning of the inner receptacle relative to a thermal element in the base unit.

The base unit 104 optionally includes a control panel 138 having one or more user controls 136 for operating the cooking appliance. User controls 136 may be used to select a cooking program to be executed by the base unit 104, where a cooking program refers to an initial set of operating parameters and optionally includes planned variations in one or more operating parameters over time. User controls may optionally be used to enter operating commands, values, or reference codes for selected operating parameters such as temperature, cook time, or other parameter values related to food preparation or operation of the cooking appliance.

A base unit in an embodiment of the invention may be adapted to read a stored identity of a program module from at least two pins (ref. pin 134, Fig. 3) in the program module. A stored identity (ID) as used herein refers to a selectable state of a program module that is retained when the program module is disconnected from an external power source. The stored ID preferably corresponds to a value of at least one parameter associated with a food vessel or a food item. Examples of stored IDs include, but are not limited to, a value of resistance between two pins in a program module, the presence or absence of a pin at a specified location in a program module, a numerical value stored in a semiconductor memory, a numerical value stored as a jumper set on a terminal block, and a numerical value saved on a label marked with machine-readable symbols. Parameters which may be associated with the stored ID of the program module include, but are not limited to, a maximum safe operating temperature for a food vessel, a maximum safe operating pressure for a food vessel, a maximum safe temperature for contents of a food vessel, for example a temperature at which the contents may combust, a maximum value of a time duration, a minimum temperature for ensuring safe consumption of cooked food, time and temperature values related to preferred food preparations, a serial number for a food vessel, and a model number for a food vessel.

The base unit 104 in the example of Fig. 5 includes a group of contacts 130 for connection to a pin in a program module. A contact 130 is an example of a vessel ID receiver (RCVR) 206. The contacts 130 are preferably sealed into a contact holder 172 that prevents liquid spilled on the top of the base unit from intruding into the interior of the base unit through the contacts. In some embodiments of a program module, according to the invention an electrical signal passes from the base unit, through a contact, into a pin touching the contact, and into the program module, and returns to the base unit through another pin and contact. In other embodiments not part of the invention, a stored identity of a food vessel is determined by noncontact means. The contact holder 172 may optionally include a window 132 through which light emitted from a light emitting diode (LED) or other light source in the base unit may pass.

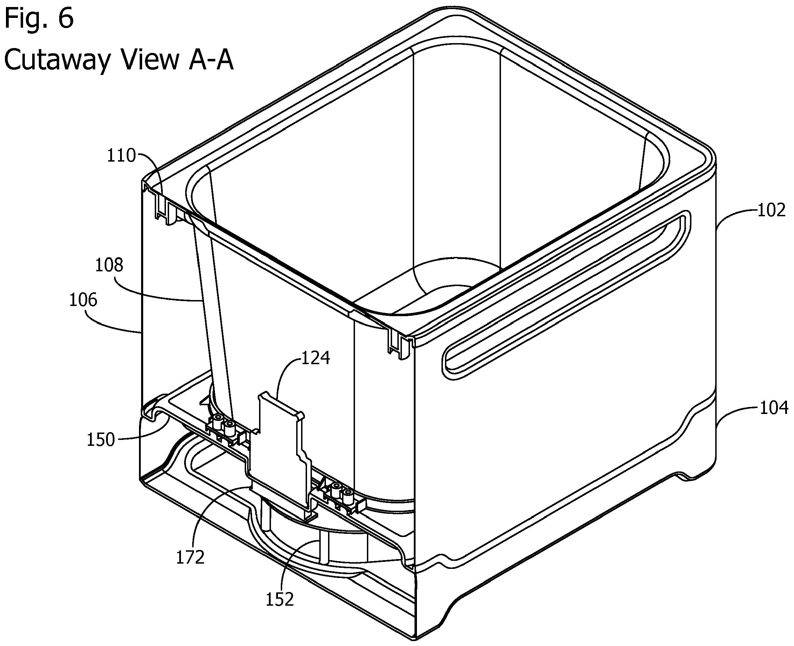

An example of a program module 124 and a contact holder 172 are shown in the cutaway pictorial view of Fig. 6. In the example of Fig. 6, a cutting plane has been passed through the front side of the food vessel 102 and base unit 104 at the position of a section line marked A-A in Fig. 2. The program module 124 fits in a gap between the inner receptacle 108 and outer housing 106. Pins on the program module 124 (pins not visible in Fig. 6) protrude through a bottom rim skirt 150 toward the contact holder 172 attached to the base unit 104. An optional air mover 152, for example a fan or blower, is visible in the base unit below the contact holder. The bottom rim skirt 150 and top rim skirt 110 securely support the inner receptacle 108 inside the food vessel 12. In some embodiments of the invention, the inner receptacle slidably engages with the top rim skirt and bottom rim skirt, enabling the inner receptacle to be removed from the food vessel 102. In other embodiments of the invention, the inner receptacle is strongly attached to, or optionally formed as an integral part of, either one or both of the top and bottom rim skirts.

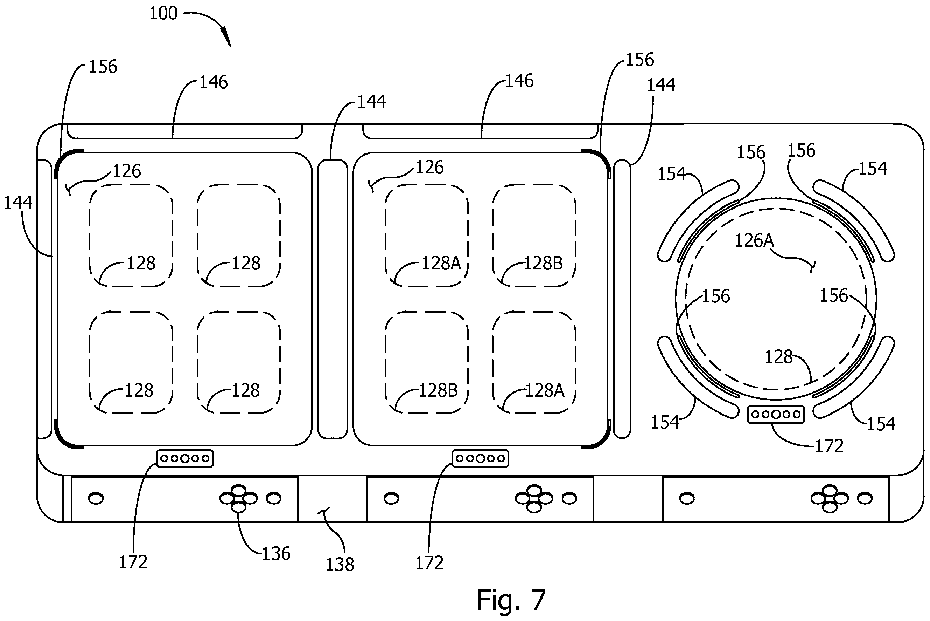

Embodiments of a cooking appliance may be arranged for holding one food vessel at a time. Or, as shown in the example of Fig. 7, a cooking appliance may be arranged for holding more than one food vessel. The example of a cooking appliance 100 in Fig. 7 includes positions for three food vessels, two with a rectangular cooktop 126 and a third with an example of a round cooktop 126A. A control panel 138 includes user controls 136 for each food vessel location. A separate contact holder 172 may be provided for communicating with a program module in a food vessel at each food vessel location. Each food vessel location may include side 144 and rear 146 channels for engaging flanges on a food vessel, or channels 154 conforming to a shape of a cooktop 126A may be included. Positioning ridges 156 may be placed near each cooktop to accurately position a food vessel. Some positioning ridges may optionally be omitted to permit a food vessel to span more than one cooktop. All cooktops (e.g., 126, 126A) on one cooking appliance 100 may optionally be provided as a single continuous surface rather than the separate surfaces shown in the figure.

A cooktop 126A may have one thermal element 128 as suggested in Fig. 7 for the rightmost food vessel location. Alternatively, a cooktop may have more than one thermal element. The leftmost food vessel location includes four thermal elements 128. A thermal element refers to an element used to induce heating or cooling in an inner receptacle of a food vessel. For an inductive cooker, a thermal element comprises an inductive coil under a cooktop. A thermal element may optionally be provided to remove heat from a food vessel. Examples of a thermal element for removing heat include, but are not limited to, a refrigeration system using a gaseous refrigerant or a liquid refrigerant and a solid state or Peltier cooler. Some thermal elements are capable of heating and cooling. Although some embodiments of the invention preferably use induction coils for heating a food vessel, other sources of heat may be preferable where electricity is not available or when the temperature response associated with a different heat source is desired. For example, a portable embodiment of the invention may use combustible liquid or gas as a heat source, regulated by a valve adjusted by the controller in the base unit, and a cooktop with apertures for combustion flames.

The middle food vessel location in Fig. 7 shows an example of a cooktop 126 adapted for heating and cooling. Two thermal elements for heating 128A and two thermal elements for cooling 128B are positioned under the cooktop 126. Embodiments of the invention may optionally include a different number of thermal elements, different positions of thermal elements, or different shapes of cooking elements than are shown in the example of Figs. 5 and 7.

A base unit may read a stored identity of a program module to adjust operating parameters for a selected food vessel. Examples of a program module 124 are shown in Figs. 8-11. Fig. 8 shows a pictorial view toward the front cover 160 of a program module having four pins 134 extending outward from a bottom side of the module. A light pipe 158 extends out from the bottom of the module. Examples of output windows 168A, 168B are visible through a slot formed in the front cover 160. Light entering the light pipe 158 at the bottom of the program module is visible through the output windows 168A, 168B. The program module 124 of Fig. 8 is shown toward the back side 162 in Fig. 9. A sensor 166 electrically connected to one or more pins 134 is mechanically connected to a sensor seat 164. The sensor seat 164 positions the sensor 166 to measure a parameter related to the interior receptacle of a food vessel. Examples of sensors include, but are not limited to, a thermocouple, a thermistor, an infrared sensor adapted for noncontact temperature measurement, a pressure sensor, and a humidity sensor.

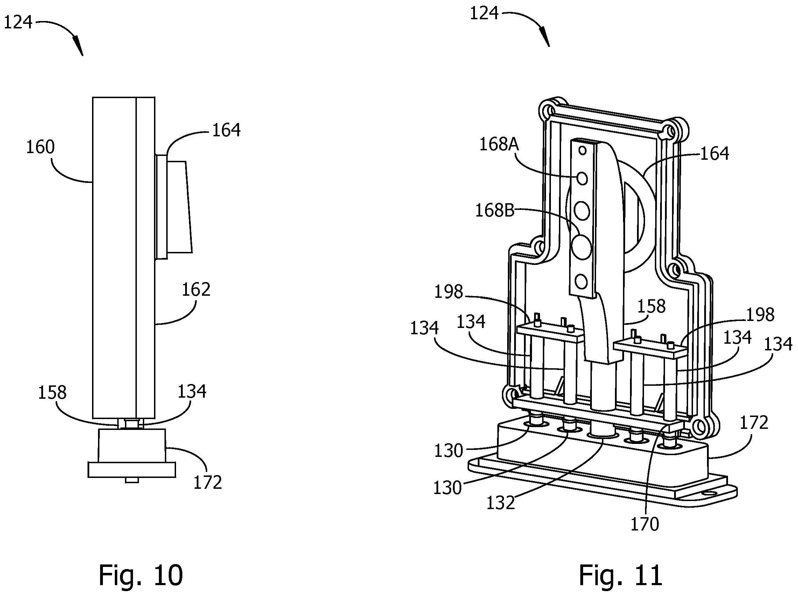

Fig. 10 shows a side view of an example of a program module 124 with the front cover 160 to the left and the back side 162 to the right. Pins 134 and a light pipe 158 are shown touching an example of a contact holder 172. A back surface of the sensor seat 164 may optionally be angled to match an angled side of an interior receptacle in a food vessel. Fig. 11 is a pictorial illustration of the example of a program module 124 with its front cover removed. In the example of Fig. 11, the pins 134 and light pipe 158 touch contacts 130 and a window 132 on the example of a contact holder 172 so that a controller in the base unit may determine a stored identity from the program module. The pins 134 may be electrically and mechanically connected to printed circuit board assemblies 198 mounted in the interior of the program module. Part of the sensor seat 164 is visible on the interior back surface of the program module 124. A seal and pin guide 170 holds the pins 134 in place and prevents liquid intrusion into the interior of the program module 124.

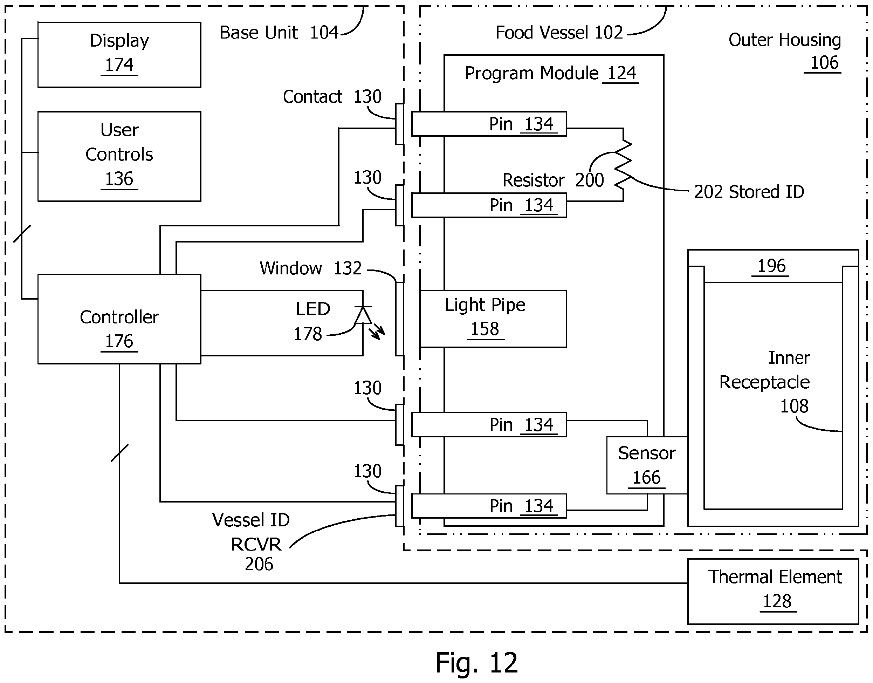

Figs. 12-13 illustrate an example of electrical and mechanical connections between a base unit 104 and a food vessel 102. The base unit 104 includes a controller 176 electrically connected to user controls 136 and optionally to a display 174 for presenting data related to cooking, for example times, temperatures, program numbers, program settings, type of cookware in use, and so on. Examples of a controller include, but are not limited to, a microcontroller, a microprocessor, an application specific integrated circuit (ASIC), a gate array, and a programmable logic device (PLD). The controller 176 is electrically connected to a thermal element 128, controlling the thermal element to achieve a selected heating or cooling effect in the inner receptacle 108 of the food vessel 102. In the example of Fig. 12, the controller 176 is electrically connected to four contacts 130 and to an LED 178 positioned near a window 132. The contacts 130 and window 132 may be part of a contact holder as explained with regard to Fig. 5. The program module 124 inside the outer housing 106 of the food vessel 102 includes at least two electrically conductive pins 134 mechanically attached to the program module and electrically connected to one another through an intervening resistor 200. A value of resistance for the resistor 200 corresponds to a stored identity 202 of the program module 124. For example, a high value of resistance may correspond to a stored identity 202 for a food vessel 102 adapted for sous vide cooking. A low value of resistance may correspond to a stored ID 202 for a food vessel adapted for baking. A unique value of resistance may be assigned to each type of food vessel available for use with the base unit 104. Each unique value of resistance may correspond to a unique stored identity of the program module 124 and may cause the controller to operate in accord with a predetermined set of operating parameters related to the stored ID 202 for the food vessel 102.

An optional sensor 166 in the program module 124 detects a parameter related to the inner receptacle 108 or to a food item inside the inner receptacle 108. A door or cover 196 may be used to close the inner receptacle 108 during food preparation. The sensor 166 may be electrically connected to two pins 134. When the food vessel 102 is placed on the base unit 104, mechanical locating features on the food vessel and base unit align the food vessel over the thermal element with the pins 134 touching the contacts 130, establishing electrical circuits for the controller 176 to determine a stored identity 202 of the program module 124 by measuring the value of resistance for the resistor 200. The controller may also measure a value of a signal output from the sensor 166 and may use the measured value to control the thermal element 128. When a food vessel is removed from the base unit and replaced with another food vessel, the controller 176 may detect the presence of the food vessel and may automatically determine the stored identity from the program module in the food vessel.

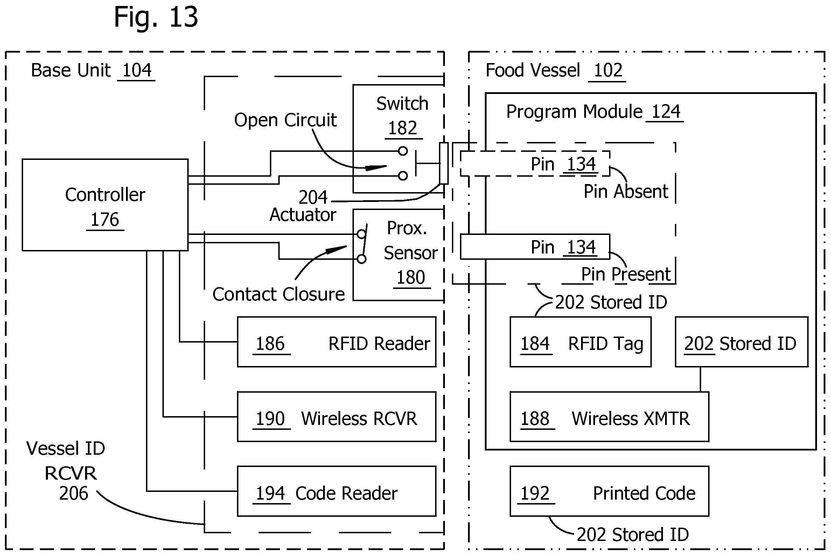

The cooking appliance in the example of Fig. 12 includes a food vessel that uses semiconductor components and the exchange of electrical signals between the program module and controller to determine a stored identity of the food vessel. In some embodiments of the invention, a controller may determine a stored ID without wired electrical connections between a food vessel and a base unit. As suggested on the example of Fig. 13, a program module may include one or more pins 134 attached in predetermined positions corresponding to one or more stored identities. The base unit may be adapted to detect the presence or absence of a pin at each predetermined position and assign a corresponding set of operating parameters to the detected stored identity. All of the active semiconductor circuit components needed to determine a stored identity of the program module are in the base unit, away from temperature extremes which may be present in the food vessel 102. For example, the controller 176 may detect the stored identity of the program module 124 by a switch 182 having an actuator 204 moved by contact with a pin 134 affixed in an assigned reference location in the program module. The number of switches and pins may be selected in accord with the number of stored identities to be retained by a program module. A pattern of switch closures related to the presence and absence of pins in a program module corresponds to a stored identity of the program module.

In an alternative embodiment of the invention, the presence or absence of a pin in a program module may be determined by a proximity sensor 180 electrically connected to the controller 176. When a pin is detected, a proximity sensor may be arranged to output a signal similar to a contact closure. Examples of a proximity sensor 180 include, but are not limited to, a Hall effect sensor, a magnetically activated switch, and an optical sensor that detects the presence or absence of a pin by interruption of a light beam or by light reflected from the pin.

A stored ID 202 for a food vessel 102 or parameter values related to a food item or food preparation method may optionally be communicated to the controller by noncontact means. For example, a radio-frequency identification (RFID) tag 184 may be mounted in a program module 124 or in another part of the food vessel 102. An RFID reader 186 electrically connected to the controller 176 may interrogate the RFID tag 184 to a stored identity 202. Alternatively, a wireless transmitter 188 adapted for data communication, for example an optical, Bluetooth, or WiFi transmitter, may be placed in the food vessel 102 or program module 124 and a wireless receiver 190 connected for data communication with the controller 176. Or, a printed code comprising machine-readable symbols representing a stored ID 202 may be applied to the food vessel 102 or program module 124. A code reader 194 in data communication with the controller 176 may read the symbols, for example symbols in the form of machine readable text, a QR code, or a bar code, and interpret the symbols as a stored ID. A switch 182, proximity sensor 180, RFID reader 186, wireless RCVR 190, and code reader 194 are examples of a vessel ID receiver 206 for determining a stored ID 202 of a program module 124. Any of the examples of a vessel ID receiver 206 may be included singly or in any combination in an embodiment of the invention.

Unless expressly stated otherwise herein, ordinary terms have their corresponding ordinary meanings within the respective contexts of their presentations, and ordinary terms of art have their corresponding regular meanings.

## Claims

1. A cooking apparatus, comprising:
a food vessel (102), comprising:
a receptacle (108) for holding food;
a stored identity for the food vessel (102); and
a program module (124) adapted to transmit the stored identity, the program module (124) further comprising:
a first pin (134) extending outward from the program module (124);
a second pin (134) extending outward from the program module (124); and
a resistor (200) electrically connected to the first pin (134) and the second pin (134); and
a base unit (104), comprising:
a thermal element (128);
a controller (176) electrically connected to the thermal element (128);
a plurality of stored operating parameters, at least one of the plurality of stored operating parameters assigned to the stored identity; and
a vessel ID receiver (206) electrically connected to the controller (176);
wherein, when the food vessel (102) is attached to the base unit (104), the vessel ID receiver (206) is adapted to receive the stored identity continuously from the program module (124) and the base unit (104) is adapted to select at least one of the plurality of stored operating parameters assigned to the stored identity and control the thermal element (128) according to the selected operating parameter, and
wherein the stored identity corresponds to a value of the resistor (200) and the controller (176) is adapted to select operating parameters assigned to the stored identity for the thermal element (128).

2. The cooking apparatus of Claim 1, wherein the food vessel (102) further comprises:
an outer housing (106);
a top rim skirt (110) attached to the receptacle (108) for holding food and to the outer housing (106); and
a bottom rim skirt (150) attached to the receptacle (108) for holding food and to the outer housing (106).

3. The cooking apparatus of Claim 1, wherein the program module (124) further comprises:
a third pin (134) extending outward from the program module (124);
a fourth pin (134) extending outward from the program module (124); and
a sensor (166) electrically connected to the third pin (134) and the fourth pin (134) and positioned to measure a selected parameter from the receptacle (108) for holding food,
wherein the controller (176) is adapted to receive a signal from the sensor (166) continuously and control the thermal unit in response to the signal from the sensor (166).

4. The cooking apparatus of Claim 3, wherein:
a first stored identity corresponds to a presence of the first pin (134) in the program module (124);
a second stored identity corresponds to an absence of the first pin (134) from the program module (124);
a third stored identity corresponds to a presence of the second pin (134) in the program module (124);
and a fourth stored identity corresponds to an absence of the second pin (134) from the program module (124),
wherein each of the stored identities are assigned to a different type of food vessel (102) and a different set of operating parameters for the thermal element (128) are assigned to each of the first, second, third, and fourth stored identities.

5. The apparatus of Claim 1, wherein the program module (124) further comprises a wireless transmitter (188) adapted to transmit the stored identity.

6. The apparatus of Claim 1, wherein the program module (124) further comprises a printed code corresponding to the stored identity.

7. The apparatus of Claim 1, further comprising:
a first side flange (140) extending downward from a bottom edge on a first side of the food vessel;
at least a second side flange (140) extending downward from a bottom edge of a second side of the food vessel;
a first side channel (144) formed on a first side of the base unit (104); and at least a second side channel (144) formed on at least a second side of the base unit (104),
wherein, when the food vessel (102) is attached to the base unit (104), the first side flange (140) slidably engages the first side channel (144) and the at least a second side flange (140) slidably engages the second or more side channel (144).

8. The apparatus of Claim 1, wherein the vessel ID receiver (206) comprises at least one switch (182) having an actuator (204) positioned to contact a pin (134) attached to the program module (124).

9. The apparatus of Claim 1, wherein the vessel ID receiver (206) comprises a proximity detector adapted to detect a pin (134) attached to the program module (124).

10. The apparatus of Claim 9, wherein the proximity detector is a Hall Effect sensor, or a magnetic sensor, or an optical sensor.

11. The apparatus of Claim 1, wherein the vessel ID receiver (206) comprises a wireless receiver (190) in data communication with the controller (176) and the controller (176) is adapted to receive the stored identity through the wireless receiver (190).

12. The apparatus of Claim 1, wherein the vessel ID receiver (206) comprises a code reader (194) adapted to read a selected one of a bar code or a QR code.

13. An apparatus, comprising:
an outer housing (106) having a side wall; and
an inner receptacle (108) attached to the outer housing (106), the inner receptacle (108) comprising a side wall separated from the side wall of the outer housing (106), thereby forming a space between the side wall of the outer housing (106) and the side wall of the inner receptacle (108);
a program module (124) attached to the outer housing (106) and positioned between the side wall of the inner receptacle (108) and the side wall of the outer housing (106), the program module (124) comprising:
a first pin (134) extending outward from the program module (124);
a second pin (134) extending outward from the program module (124);
a resistor (200) electrically connected to the first pin (134) and the second pin (134);
a third pin (134) extending outward from the program module (124);
a fourth pin (134) extending outward from the program module (124); and
a sensor (166) electrically connected to the third pin (134) and the fourth pin (134) and positioned to measure a selected parameter from the inner receptacle (108),
wherein a value of resistance of the resistor (200) corresponds to a stored identity for the apparatus.

14. A base unit (104) for a cooking apparatus according to any one of claims 1 to 12, comprising:
a cooktop (126) for supporting the food vessel (102) of the cooking appliance;
a thermal element (128) positioned below the cooktop (126);
a controller (176) electrically connected to the thermal element (128) and adapted for controlling the thermal element (128);
a vessel ID receiver (206) electrically connected to the controller (176);
a plurality of stored operating parameters; and
a group of contacts (130) for connection to the pins (134) in the program module (124) of the food vessel (102), such that when the food vessel (102) is placed on the base unit (104), with the pins (134) touching the contacts (130), establishing electrical circuits for the controller (176) to determine the stored identity (202) of the program module (124) by measuring the value of resistance for the resistor (200);
wherein the controller (176) is adapted to continuously receive the stored identity for the food vessel (102) from the vessel ID receiver (206), select at least one of the plurality of stored operating parameters assigned to the stored identity (202), and control the thermal element (128) by the selected operating parameter.

## Patentansprüche

1. Kochvorrichtung mit:
einem Kochgefäß (102) mit:
einem Behälter (108) zur Nahrungsmittelaufnahme,
einer gespeicherten Kennung für das Kochgefäß (102), und
einem Programmmodul (124), das zum Übertragen der gespeicherten Kennung ausgebildet ist, wobei das Programmmodul (124) zusätzlich aufweist:
einen ersten Stift (134), der sich von dem Programmmodul (124) auswärts erstreckt,
einen zweiten Stift (134), der sich von dem Programmmodul (124) auswärts erstreckt, und
einem Widerstand (200), der mit dem ersten Stift (134) und dem zweiten Stift (134) elektrisch verbunden ist, und
einer Basiseinheit (104) mit:
einem Wärmeelement (128),
einer Steuerung (176), die mit dem Wärmeelement (128) elektrisch verbunden ist,
einer Mehrzahl von gespeicherten Betriebsparametern, wovon mindestens ein Betriebsparameter der gespeicherten Kennung zugewiesen ist, und
einem Gefäß-ID-Empfänger (206), der mit der Steuerung (176) elektrisch verbunden ist,
wobei, wenn das Kochgefäß (102), an der Basiseinheit (104) angebracht ist, der Gefäß-ID-Empfänger (206) zum kontinuierlichen Empfang der gespeicherten Kennung von dem Programmmodul (124) ausgebildet ist, und die Basiseinheit (104) ausgebildet ist, mindestens einen der Mehrzahl von gespeicherten Betriebsparametern, die der gespeicherten Kennung zugewiesen sind, auszuwählen und das Wärmeelement (128) gemäß dem ausgewählten Betriebsparameter zu steuern, und
wobei die gespeicherte Kennung einem Wert des Widerstands (200) entspricht und die Steuerung (176) zur Auswahl von Betriebsparametern ausgebildet ist, die der gespeicherten Kennung für das Wärmeelement (128) zugewiesen sind.

2. Kochvorrichtung nach Anspruch 1, bei der das Kochgefäß (102) zusätzlich aufweist:
ein Außengehäuse (106),
eine obere Randleiste (110), die an dem Behälter (108) zur Nahrungsmittelaufaufnahme und an dem Außengehäuse (106) angebracht ist, und
eine untere Randleiste (150), die an dem Behälter (108) zur Nahrungsmittelaufaufnahme und an dem Außengehäuse (106) angebracht ist.

3. Kochvorrichtung nach Anspruch 1, bei der das Programmmodul (124) zusätzlich aufweist:
einen dritten Stift (134), der sich von dem Programmmodul (124) auswärts erstreckt,
einen vierten Stift (134), der sich vom dem Programmmodul (124) auswärts erstreckt, und
einen Sensor (166), der mit dem dritten Stift (134) und dem vierten Stift (134) elektrisch verbunden ist und zur Messung eines ausgewählten Parameters von dem Behälter (108) zur Nahrungsmittelaufaufnahme positioniert ist,
wobei die Steuerung (176) zum kontinuierlichen Empfang eines Signals von dem Sensor (166) und zum Steuern der Wärmeeinheit in Reaktion auf das Signal von dem Sensor (166) ausgebildet ist.

4. Kochvorrichtung nach Anspruch 3, bei der
eine erste gespeicherte Kennung einem Vorhandensein des ersten Stiftes (134) in dem Programmmodul (124) entspricht,
eine zweite gespeicherte Kennung einer Abwesenheit des ersten Stiftes (134) in dem Programmmodul (124) entspricht,
eine dritte gespeicherte Kennung einem Vorhandensein des zweiten Stiftes (134) in dem Programmmodul (124) entspricht,
und eine vierte gespeicherte Kennung einer Abwesenheit des zweiten Stiftes (134) in dem Programmmodul (124) entspricht,
wobei jede der gespeicherten Kennungen einem unterschiedlichen Typ eines Kochgefäßes (102) zugewiesen wird und ein unterschiedlicher Satz von Betriebsparametern für das Wärmeelement (128) jeder der ersten, zweiten, dritten und vierten gespeicherten Kennungen zugewiesen wird.

5. Vorrichtung nach Anspruch 1, bei der das Programmmodul (124) zusätzlich einen drahtlosen Sender (188) aufweist, der zum Übertragen der gespeicherten Kennung ausgebildet ist.

6. Vorrichtung nach Anspruch 1, bei der das Programmmodul (124) zusätzlich einen gedruckten Code aufweist, der der gespeicherten Kennung entspricht.

7. Vorrichtung nach Anspruch 1, zusätzlich mit:
einem ersten Seitenflansch (140), der sich an einer ersten Seite des Kochgefäßes befindlichen Unterkante abwärts erstreckt,
mindestens einem zweiten Seitenflansch (140), der sich an einer zweiten Seite des Kochgefäßes befindlichen Unterkante abwärts erstreckt,
einem ersten Seitenkanal (144), der an einer ersten Seite der Basiseinheit (104) ausgebildet ist und mindestens einem zweiten Seitenkanal (144), der auf mindestens einer zweiten Seite der Basiseinheit (104) ausgebildet ist,
wobei, wenn das Kochgefäß (102) an der Basiseinheit (104) angebracht ist, der erste Seitenflansch (140) gleitend in den ersten Seitenkanal (144) eingreift und der mindestens eine zweite Seitenflansch (140) gleitend in den zweiten oder in mehrere Seitenkanäle (144) eingreift.

8. Vorrichtung nach Anspruch 1, bei der der Gefäß-ID-Empfänger (206) mindestens einen Schalter (182) mit einem Aktuator (204) aufweist, der zur Kontaktierung eines Stifts (134) positioniert ist, der an dem Programmmodul (124) angebracht ist.

9. Vorrichtung nach Anspruch 1, bei der der Gefäß-ID-Empfänger (206) einen Näherungsdetektor aufweist, der zum Erfassen eines Stifts (134) ausgebildet ist, der an dem Programmmodul (124) angebracht ist.

10. Vorrichtung nach Anspruch 9, bei der der Näherungsdetektor ein Hall-Effekt-Sensor oder ein Magnetsensor oder ein optischer Sensor ist.

11. Vorrichtung nach Anspruch 1, bei der der Gefäß-ID-Empfänger (206) einen drahtlosen Empfänger (190) in Datenkommunikation mit der Steuerung (176) aufweist, und die Steuerung (176) zum Empfang der gespeicherten Kennung über den drahtlosen Empfänger (190) ausgebildet ist.

12. Vorrichtung nach Anspruch 1, bei der der Gefäß-ID-Empfänger (206) einen Codeleser aufweist, der zum Lesen eines ausgewählten Codes umfassend einen Strichcode oder einen QR-Code ausgebildet ist.

13. Vorrichtung mit:
einem Außengehäuse (106) mit einer Seitenwand, und
einem Innenbehälter (108), der an dem Außengehäuse (106) angebracht ist, wobei der Innenbehälter (108) eine Seitenwand aufweist, die von der Seitenwand des Außengehäuses (106) getrennt ist, wodurch ein Raum zwischen der Seitenwand des Außengehäuses (106) und der Seitenwand des Innenbehälters (108) gebildet ist;
einem Programmmodul (124), das an dem Außengehäuse (106) angebracht ist und zwischen der Seitenwand des Innenbehälters (108) und der Seitenwand des Außengehäuses (106) platziert ist, wobei das Programmmodul (124) aufweist:
einen ersten Stift (134), der sich von dem Programmmodul (124) auswärts erstreckt,
einen zweiten Stift (134), der sich von dem Programmmodul (124) auswärts erstreckt,
einen Widerstand (200), der mit dem ersten Stift (134) und dem zweiten Stift (134) elektrisch verbunden ist,
einen dritten Stift (134), der sich von dem Programmmodul (124) auswärts erstreckt,
einen vierten Stift (134), der sich von dem Programmmodul (124) auswärts erstreckt, und
einen Sensor (166), der mit dem dritten Stift (134) und dem vierten Stift (134) elektrisch verbunden ist, und der zum Messen eines ausgewählten Parameters aus dem Innenbehälter (108) positioniert ist,
wobei ein Widerstandswert des Widerstands (200) einer gespeicherten Kennung für die Vorrichtung entspricht.

14. Basiseinheit (104) für eine Kochvorrichtung nach einem der Ansprüche 1 bis 12, mit:
einem Kochfeld (126), das ein Kochgefäß (102) des Kochgeräts trägt,
einem Wärmeelement (128), das unterhalb des Kochfeldes (126) positioniert ist,
einer Steuerung (176), die mit dem Wärmeelement (128) elektrisch verbunden und zum Steuern des Wärmeelements (128) ausgebildet ist,
einem Gefäß-ID-Empfänger (206), der mit der Steuerung (176) elektrisch verbunden ist,
einer Mehrzahl von gespeicherten Betriebsparametern, und
einer Gruppe von Kontakten (130) zur Verbindung mit den Stiften (134) im Programmmodul (124) des Kochgefäßes (102), so dass, wenn das Kochgefäß (102) auf der Basiseinheit (104) mit den Stiften (134), die die Kontakte (130) berühren, platziert ist, elektrische Schaltungen für die Steuerung (176) zum Bestimmen der gespeicherten Kennung (202) des Programmmoduls (124) durch Messen des Widerstandswertes für den Widerstand (200) errichtet werden,
wobei die Steuerung (176), die zum kontinuierlichen Empfang der gespeicherten Kennung für das Kochgefäß (102) von dem Gefäß-ID-Empfänger (206) ausgebildet ist, mindestens einen der Mehrzahl von gespeicherten Betriebsparametern, die der gespeicherten Kennung zugewiesen, sind auswählt und das Wärmeelement (128) mittels des ausgewählten Betriebsparameters steuert.

## Revendications

1. Appareil de cuisson, comprenant :
un récipient alimentaire (102), comprenant :
un réceptacle (108) pour contenir des aliments ;
une identité stockée pour le récipient alimentaire (102) ; et
un module de programme (124) adapté pour transmettre l'identité stockée, le module de programme (124) comprenant en outre :
une première broche (134) s'étendant vers l'extérieur à partir du module de programme (124) ;
une deuxième broche (134) s'étendant vers l'extérieur à partir du module de programme (124) ; et
une résistance (200) connectée électriquement à la première broche (134) et à la deuxième broche (134) ; et
une unité de base (104), comprenant :
un élément thermique (128) ;
un régulateur (176) relié électriquement à l'élément thermique (128) ;
une pluralité de paramètres de fonctionnement stockés, au moins l'un de la pluralité de paramètres de fonctionnement stockés affectés à l'identité stockée ; et
un récepteur d'identification de récipient (206) connecté électriquement au régulateur (176) ;
où, lorsque le récipient alimentaire (102) est fixé à l'unité de base (104), le récepteur d'identification de récipient (206) est adapté pour recevoir l'identité stockée en continu du module de programme (124) et l'unité de base (104) est adaptée pour sélectionner au moins un paramètre parmi la pluralité de paramètres de fonctionnement stockés affectés à l'identité stockée et commander l'élément thermique (128) selon le paramètre de fonctionnement sélectionné, et
où l'identité stockée correspond à une valeur de la résistance (200) et le régulateur (176) est adapté pour sélectionner les paramètres de fonctionnement affectés à l'identité stockée de l'élément thermique (128).

2. Appareil de cuisson selon la revendication 1, dans lequel le récipient alimentaire (102) comprend en outre :
un boîtier extérieur (106) ;
une jupe de bord supérieur (110) fixée au réceptacle (108) pour contenir les aliments et au boîtier extérieur (106) ; et
une jupe de bord inférieur (150) fixée au réceptacle (108) pour contenir des aliments et au boîtier extérieur (106).

3. Appareil de cuisson selon la revendication 1, dans lequel le module de programme (124) comprend en outre :
une troisième broche (134) s'étendant vers l'extérieur à partir du module de programme (124) ;
une quatrième broche (134) s'étendant vers l'extérieur à partir du module de programme (124) ; et
un capteur (166) connecté électriquement à la troisième broche (134) et à la quatrième broche (134) et positionné pour mesurer un paramètre sélectionné à partir du réceptacle (108) pour contenir des aliments,
où le régulateur (176) est adapté pour recevoir un signal du capteur (166) en continu et commander l'unité thermique en réponse au signal du capteur (166).

4. Appareil de cuisson selon la revendication 3, où :
une première identité stockée correspond à une présence de la première broche (134) dans le module de programme (124) ;
une deuxième identité stockée correspond à une absence de la première broche (134) du module de programme (124) ;
une troisième identité stockée correspond à une présence de la deuxième broche (134) dans le module de programme (124) ;
et une quatrième identité stockée correspond à une absence de la deuxième broche (134) du module de programme (124),
où chacune des identités stockées est affectée à un type différent de récipient alimentaire (102) et un ensemble différent de paramètres de fonctionnement pour l'élément thermique (128) est affecté à chacune des première, deuxième, troisième et quatrième identités stockées.

5. Appareil selon la revendication 1, dans lequel le module de programme (124) comprend en outre un émetteur sans fil (188) adapté pour transmettre l'identité stockée.

6. Appareil selon la revendication 1, dans lequel le module de programme (124) comprend en outre un code imprimé correspondant à l'identité stockée.

7. Appareil selon la revendication 1, comprenant en outre :
une première bride latérale (140) s'étendant vers le bas à partir d'un bord inférieur sur un premier côté du récipient alimentaire ;
au moins une deuxième bride latérale (140) s'étendant vers le bas à partir d'un bord inférieur d'un deuxième côté du récipient alimentaire ;
un premier canal latéral (144) formé sur un premier côté de l'unité de base (104); et au moins un deuxième canal latéral (144) formé sur au moins un deuxième côté de l'unité de base (104),
où, lorsque le récipient alimentaire (102) est fixé à l'unité de base (104), la première bride latérale (140) vient en prise coulissante avec le premier canal latéral (144) et ladite au moins une deuxième bride latérale (140) vient en prise coulissante avec le deuxième ou plus canal latéral (144).

8. Appareil selon la revendication 1, où le récepteur d'identification de récipient (206) comprend au moins un commutateur (182) ayant un actionneur (204) positionné pour contacter une broche (134) fixée au module de programme (124).

9. Appareil selon la revendication 1, où le récepteur d'identification de récipient (206) comprend un détecteur de proximité adapté pour détecter une broche (134) fixée au module de programme (124).

10. Appareil selon la revendication 9, où le détecteur de proximité est un capteur à effet Hall, ou un capteur magnétique, ou un capteur optique.

11. Appareil selon la revendication 1, dans lequel le récepteur d'identification de récipient (206) comprend un récepteur sans fil (190) en communication de données avec le régulateur (176) et le régulateur (176) est adapté pour recevoir l'identité stockée par le récepteur sans fil (190).

12. Appareil selon la revendication 1, dans lequel le récepteur d'identification de récipient (206) comprend un lecteur de code (194) adapté pour lire un code sélectionné parmi un code à barres ou un code QR.

13. Appareil, comprenant :
un boîtier extérieur (106) ayant une paroi latérale ; et
un réceptacle intérieur (108) fixé au boîtier extérieur (106), le réceptacle intérieur (108) comprenant une paroi latérale séparée de la paroi latérale du boîtier extérieur (106), formant ainsi un espace entre la paroi latérale du boîtier extérieur (106) et la paroi latérale du réceptacle intérieur (108) ;
un module de programme (124) fixé au boîtier extérieur (106) et positionné entre la paroi latérale du réceptacle intérieur (108) et la paroi latérale du boîtier extérieur (106), le module de programme (124) comprenant :
une première broche (134) s'étendant vers l'extérieur à partir du module de programme (124) ;
une deuxième broche (134) s'étendant vers l'extérieur à partir du module de programme (124) ;
une résistance (200) reliée électriquement à la première broche (134) et à la deuxième broche (134) ;
une troisième broche (134) s'étendant vers l'extérieur à partir du module de programme (124) ;
une quatrième broche (134) s'étendant vers l'extérieur à partir du module de programme (124) ; et
un capteur (166) relié électriquement à la troisième broche (134) et la quatrième broche (134) et positionné pour mesurer un paramètre sélectionné à partir du réceptacle interne (108),
où une valeur de résistance de la résistance (200) correspond à une identité stockée pour l'appareil.

14. Unité de base (104) pour un appareil de cuisson selon l'une quelconque des revendications 1 à 12, comprenant :
une table de cuisson (126) pour supporter le récipient alimentaire (102) de l'appareil de cuisson ;
un élément thermique (128) positionné sous la table de cuisson (126) ;
un régulateur (176) connecté électriquement à l'élément thermique (128) et adapté pour commander l'élément thermique (128) ;
un récepteur d'identification de récipient (206) connecté électriquement au régulateur (176) ;
une pluralité de paramètres de fonctionnement stockés ; et
un groupe de contacts (130) pour la connexion aux broches (134) dans le module de programme (124) du récipient alimentaire (102), de sorte que lorsque le récipient alimentaire (102) est placé sur l'unité de base (104), les broches (134) touchant les contacts (130), établissant des circuits électriques pour le régulateur (176) pour déterminer l'identité stockée (202) du module de programme (124) en mesurant la valeur de résistance de la résistance (200) ;
où le régulateur (176) est adapté pour recevoir en continu l'identité stockée pour le récipient alimentaire (102) du récepteur d'identification de récipient (206), sélectionner au moins l'un de la pluralité de paramètres de fonctionnement stockés affectés à l'identité stockée (202), et commander l'élément thermique (128) par le paramètre de fonctionnement sélectionné.
